# EUROPEAN PATENT SPECIFICATION

(11) **EP 3 654 073 B1**
(45) Date of publication and mention of the grant of the patent: **07.08.2024**
(21) Application number: 19200539.5
(22) Date of filing: 30.09.2019
(51) Int. Cl.: G02B 1/115, G02B 1/14, H04M 1/02, H04N 23/57, G02B 27/01

(54) **MOBILE TERMINAL**
MOBILES ENDGERÄT
TERMINAL MOBILE

(30) Priority: 19.11.2018 CN 201811379105
(43) Date of publication of application: 20.05.2020
(73) Proprietor: Beijing Xiaomi Mobile Software Co., Ltd., Beijing 100085 (CN)
(72) Inventor: ZHANG, Lintao, Beijing, Beijing 100085 (CN)
(74) Representative: dompatent von Kreisler Selting Werner - Partnerschaft von Patent- und Rechtsanwälten mbB

(56) References cited:
- EP-A1- 1 136 973
- KR-A- 20170 133 773
- US-A1- 2017 124 933
- US-A1- 2017 176 246
- US-A1- 2017 287 992

## Description

### TECHNICAL FIELD

This disclosure relates to the technical field of terminals, and particularly to a mobile terminal.

### BACKGROUND

With development of a full-screen technology, it may be required to arrange optical devices, such as a camera or an ambient light sensing device, beneath a display screen. Input signals of these optical devices are outside light. Energy and quality of the outside light to pass through the display screen to these optical devices may directly affect performance of the optical devices. Thus, how to improve the performance of the optical devices located beneath the display screen is a technical problem to be solved.

US 2017/287992 describes an electronic device including a housing, comprising a first surface including a transparent later and a second surface, a display exposed through the transparent layer and including an active area, a first adhesive layer, a touchscreen panel, and a second adhesive layer, an opening formed at least partially through the first adhesive layer, a plurality of conductive lines disposed extending around a periphery of the opening so as not to optically block the opening, a camera device positioned including an image sensor disposed through at least a portion of the opening, and an integrated circuit (IC) electrically coupled to the plurality of conductive lines, wherein the IC is configured to provide image data to the display.

US2017/124933A1 describes a mobile terminal comprising an light sensor, a display module, an optical anti-reflective film, the display module being located above the light sensor, and the optical anti-reflective film is located on the display module at a position corresponding to the position of the light sensor.

### SUMMARY

To overcome the problems existed in the relative art, an embodiment of the present disclosure provides a mobile terminal for improving performance of an optical device located under the display module.

According to a first aspect of the embodiment of the present disclosure, a mobile terminal according to claim 1 includes an optical device, a display module, and an optical antireflective film (anti-reflection coating);

the display module is located above the optical device; the optical antireflective film is located on the display module and corresponds to the optical device.

In one embodiment, the display module includes a display screen and a protective layer;

the display screen is located above the optical device and the protective layer is located above the display screen.

In one embodiment, the display module may further include a transparent adhesive layer;
the transparent adhesive layer is located between the display screen and the protective layer.

In one embodiment, an area of the optical antireflective film may be greater than or equal to a projected area of the optical device on the display module.

In one embodiment, the optical antireflective film may include at least two sub-film layers, and the at least two sub-film layers respectively anti-reflect lights with different wavelength ranges.

In one embodiment, the optical antireflective film may be made of calcium fluoride, titanium oxide, lead sulfide, lead selenide, ceramic infrared antireflection film or vinyl silsesquioxane hybrid film.

In one embodiment, the protective layer may be a glass cover or a flexible cover film.

In one embodiment, the flexible cover film may include a polyimide film.

The technical solution provided by the present disclosure may include the following advantageous effects: an optical antireflective film is provided on the display module located above the optical device, so that this can improve the energy and quality of light incident on the optical device under the display module through the display module, and also can improve the energy and quality of the light emitted by the optical device through the display module. Thus, the technical solution of the embodiment of the present disclosure can improve the performance of the optical device located under the display module.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments of the present disclosure and, together with the specification, serve to explain the principles of the disclosure.
Fig. 1 is a schematic diagram of a mobile terminal according to related art.
Fig. 2 is a schematic diagram of an optical path according to the related art.
Fig. 3 is a schematic diagram of a mobile terminal according to one example not being part of the invention.
Fig. 4 is a schematic diagram of a cross-section of the mobile terminal according to one example not being part of the invention.
Fig. 5 is a schematic diagram of a cross-section of a mobile terminal according to another example not being part of the invention.
Fig. 6 is a schematic diagram of a cross-section of a mobile terminal according to another example not being part of the invention.
Fig. 7 is a schematic diagram of a cross-section of a mobile terminal according to another example embodiment.

### DETAILED DESCRIPTION

Herein, the example embodiments will be described in detail and illustrated in the accompanying drawings. When the description hereinafter refers to the drawings, the same number in different drawings indicates the same or similar elements, unless having another indication. The implementations as described in the example embodiments do not represent all implementations in consistence with the present disclosure. Instead, these implementations are merely examples of devices and methods corresponding to some aspects of the present disclosure, as claimed in the claims.

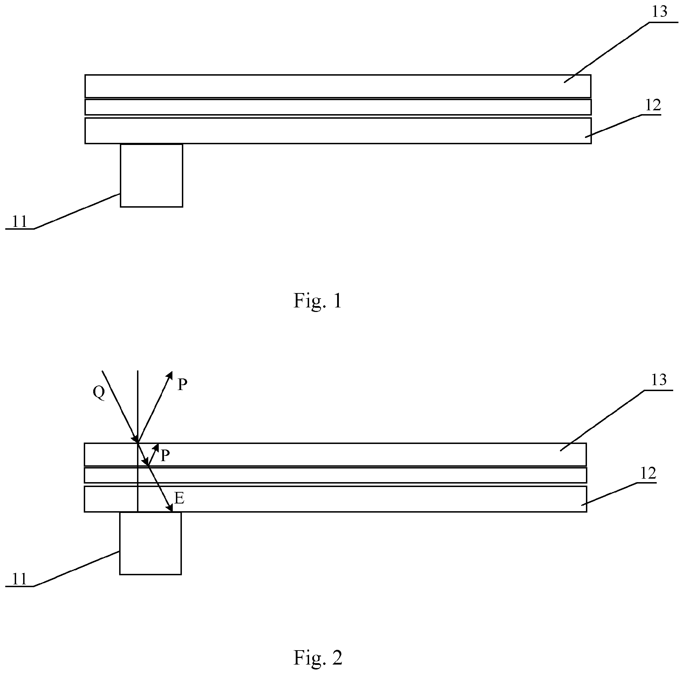

In the related art, as an increasing trend of the mobile phone with a full-screen, it is required to place an optical device 11, such as a camera or ambient light sensing device beneath a display screen 12 in the future, particularly as shown in Fig. 1. A protective layer 13 may be provided above the display screen 12. The protective layer 13 may be a glass cover or a protective film or the like. Input signals of these optical devices 11 are outside light. Energy and quality of the outside light passing through the display screen 12 to these optical devices 11 may directly affect the performance of the optical devices 11.

For example, a path of an incident light Q entering the optical devices 11 is shown in Fig. 2. The incident light Q is reflected on upper and lower surfaces of the protective layer 13. The reflected light P loses its energy and may not enter the optical devices 11. Moreover, a part of the incident light Q does not enter the optical devices 11, since the energy of the part of the incident light Q is absorbed by the protective layer 13 and the display screen 12. That is, the energy of useful light E entering the optical devices 11 = the energy of the incident light - the energy of the reflected light - the energy of the light absorbed by the protective layer and the display screen.

The reflected light is formed due to refraction/reflection of air and the protective layer 13. If the protective layer 13 is a glass cover, and a typical refractive index of the glass is n_{glass} = 1.5, and a reflectivity R_{glass} = (n_{glass} - nₐᵢᵣ) ² / (n_{glass} + nₐᵢᵣ) ², the reflectivity R_{glass} = 4% will be obtained. Since the incident light Q enters the protective layer 13 from the air and enters the air from the protective layer 13, at least two reflections occur while entering the optical devices 11, As a result, about 8% of incident light will be lost due to the reflections.

Embodiments of the present disclosure provide a mobile terminal, to solve the above technical problems, and may improve the performance of optical devices located beneath a display module.

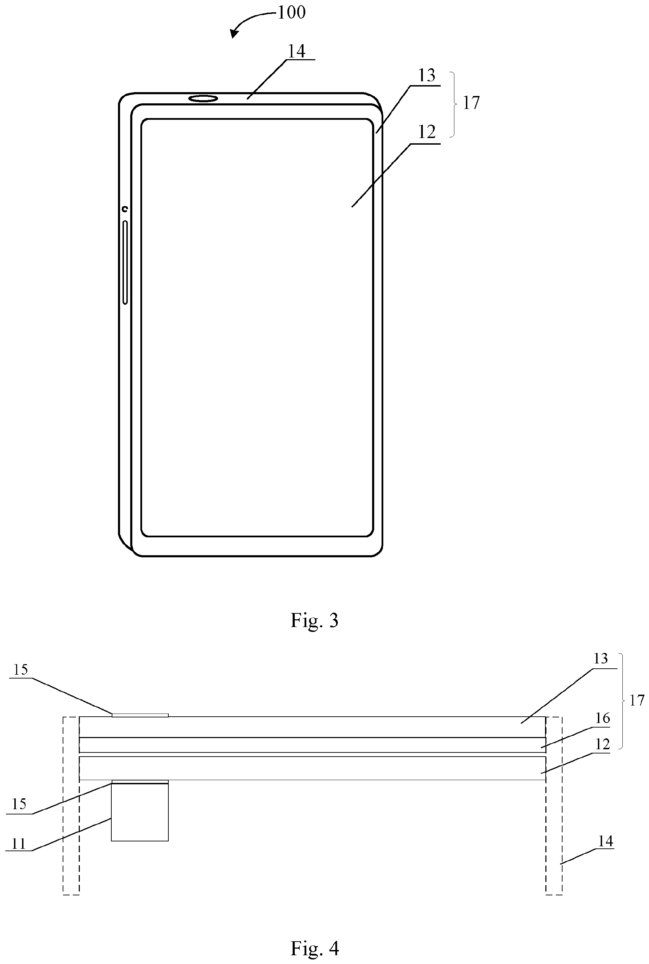

Fig. 3 is a schematic diagram of a mobile terminal 100 according to the example. The mobile terminal 100 includes a housing 14 and a display module 17. The display module 17 is located in the housing 14. The display module 17 includes a transparent protective layer 13 and a display screen 12 located beneath the protective layer 13. Light emitted from the display screen 12 may transmit through the protective layer 13. The display screen 12 may be observed through the transparent protective layer 13. The display screen 12 may be, for example, an organic light-emitting diode (OLED) display screen, but not limited thereto. When the mobile terminal 100 is an upright mobile terminal, the protective layer 13 may be a glass cover. When the mobile terminal 100 is a foldable flexible screen mobile terminal, the protective layer 13 may be a flexible cover film. The flexible cover film may include a polyimide (PI) film.

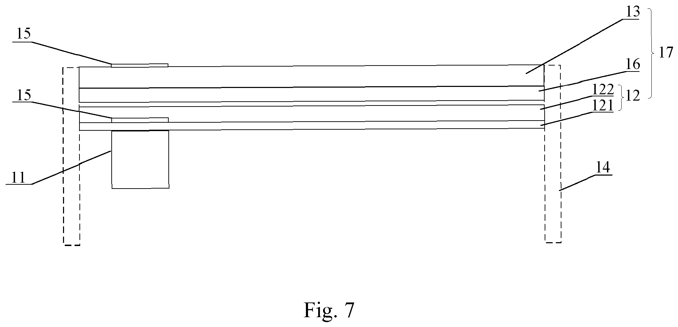

Figs. 4 to 6 are schematic diagrams not according to the claimed invention. Figure 7 is a schematic diagram of a cross-section of the mobile terminal according to the present disclosure. As shown in Fig. 7, the mobile terminal 100 of the present disclosure further includes an optical device 11 and an optical antireflective film 15.

As shown in Fig. 7, the display module 17 is located above the optical device 11. The optical antireflective film 15 is located on the display module 17 and corresponds to the optical device 11. Therein the position of the optical antireflective film 15 corresponds to the position of the optical device 11 beneath the display module 17. Therein the position might be adapted such that light reaching the optical device 11 is at least partially and preferably completely transmitted before through the optical antireflective film 15. The optical antireflective film 15 is located on the display module 17, and the optical antireflective film 15 is located inside the display module 17.

In one embodiment, the optical device 11 may be an image sensor (camera), an ambient optical device, a 3D distance sensor, or a fingerprint sensor. The 3D distance sensor may be a 3D structure optical device, which may be an infrared lens (infrared emitter), a floodlight sensing element or a dot matrix projector. In one embodiment, there are a plurality of optical devices 11.

It should be noted that, in the embodiment of the present disclosure, the above-mentioned "above" refers to a direction of the optical device 11 directing to the display module 17.

In the example of the present disclosure, the optical antireflection film is provided on the display module located above the optical device, in this way, the energy and quality of the light transmitted through the display module to the optical device located under the display module may be improved, and also the energy and quality of the light emitted by the optical device through the display module may be improved. As a result, the technical solution of the example of the present disclosure can improve the performance of the optical device located under the display module.

In one example not according to the claimed invention, as shown in Fig. 4, the display module 17 may include a display screen 12 and a protective layer 13. The display screen 12 is located above the optical device 11, and the protective layer 13 is located above the display screen 12.

In one example not according to the claimed invention, as shown in Fig. 4, the optical antireflection film 15 is located on the surface of the protective layer 13 facing away from the display screen 12. For example, when the light is transmitted from the outside to the optical antireflective film 15, the light reflected from the surface of the optical antireflective film 15 facing away from the protective layer 13 (the upper surface) interferes with the light reflected from the surface of the optical antireflective film facing to the protective layer 13 (the lower surface), and thereby canceling each other. When viewed toward the upper surface of the optical antireflective film 15, no reflected light is visible because the incident light has completely passed through the protective layer 13 according to the conservation of energy. Thus, the optical antireflective film 15 is arranged on the upper surface of the protective layer 13, which can improve the energy and quality of light transmitting through the protective layer 13, and further improve the energy and quality of the light transmitted into the optical device located beneath the display module through the display module.

In one example not according to the claimed invention, as shown in Fig. 4, the optical antireflective film 15 is located on the surface of the display screen 12 facing the optical device 11. For example, when the optical device 11 emits light, the light emitted from the optical device 11 is transmitted to the optical antireflective film 15, and then the light reflected from the surface of the optical antireflective film 15 facing away from the display screen 12 (the lower surface) interferes with the light reflected from the surface of the optical antireflective film facing the display screen 12 (the upper surface), thereby canceling each other. When viewed toward the lower surface of the optical antireflective film 15, no reflected light is visible because the light emitted from the optical device 11 has completely passed through the display screen 12 according to the conservation of energy. Thus, the optical antireflective film 15 is arranged on the lower surface of the display screen 12, which can improve the energy and quality of light emitted from the optical device through the display screen 12.

It should be noted that the optical antireflective film 15 has wavelength selectivity for the light to be anti-reflected. Specifically, when the optical antireflective film 15 has different thicknesses, the lights to be anti-reflected have different wavelengths. For example, when the thickness of the optical antireflective film 15 is odd times of 1/4 wavelength of a red light, the red lights reflected from the two surfaces of the optical antireflective film interfere with each other, thereby canceling each other. When viewed toward the upper surface of the optical antireflective film 15, no reflected red light is visible because the red light in the incident light has completely passed through the protective layer 13 according to the conservation of energy. However, when the thickness of the optical antireflective film 15 is odd times of 1/4 wavelength of the red light, the violet light will not certainly be anti-reflected.

In one example, the optical antireflective film 15 may include at least two sub-film layers, which may respectively anti-reflect the lights with different wavelength ranges. In this way, more bands of light can be anti-reflected. Hereinafter, it will be illustrated as an example that the wavelength range of the visible light is 380-700 nm and the optical antireflective film 15 includes three sub-film layers. The optical antireflective film 15 may include a first sub-film layer, a second sub-film layer, and a third sub-film layer stacked one another. In this example, according to a relationship between the thickness of the film layer and the wavelength, the first sub-film layer may be made to anti-reflect the light with a wavelength of 380-450 nm, the second sub-film layer may be made to anti-reflect the light with a wavelength of 451-550 nm, and the third sub-film layer may be made to anti-reflect the light with a wavelength of 551-700 nm. In this way, the light in a full range of visible light can be anti-reflected, to improve the energy and quality of the visible light transmitted into the optical device under the display screen, or to improve the energy and quality of the visible light emitted by the optical device through the display screen. The scope of the invention is defined by the appended claims.

In one example not according to the claimed invention, as shown in Fig. 4, the display module 17 may further include a transparent adhesive layer 16. The transparent adhesive layer 16 is located between the display screen 12 and the protective layer 13. The transparent adhesive layer 16 may be made of optically clear adhesive (OCA), for bonding the protective layer 13 and the display screen 12.

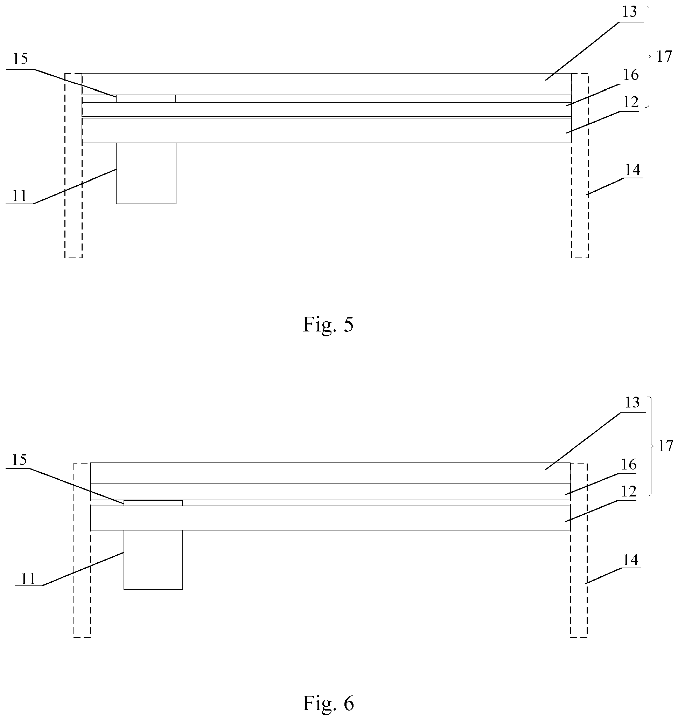

In one example not according to the claimed invention, as shown in Fig. 5, when a difference between the refractive index of the transparent adhesive layer 16 and the refractive index of the protective layer 13 is greater than 0.1, the optical antireflective film 15 may be provided between the protective layer 13 and the transparent adhesive layer 16. A difference between the refractive index of the protective layer 13 and the refractive index of the optical antireflective film 15 may be greater than 0.1, and a difference between the refractive index of the transparent adhesive layer 16 and the refractive index of the optical antireflective film 15 may be greater than 0.1. When the difference between the refractive index of the transparent adhesive layer 16 and the refractive index of the protective layer 13 is greater than 0.1, the incident light will be reflected at an interface between the transparent adhesive layer 16 and the protective layer 13. Thus, the optical antireflective film 15 is provided between the transparent adhesive layer 16 and the protective layer 13, which can improve the performance of the optical device located beneath the display module.

In an example not according to the claimed invention, the protective layer 13 is a flexible cover film. The flexible cover film includes a polyimide (PI) film. The material of the transparent adhesive layer 16 is OCA. Since a refractive index of the PI film is greater than 1.68 and a refractive index of the OCA is 1.48, the difference between the refractive index of the transparent adhesive layer 16 and the refractive index of the protective layer 13 is greater than 0.2, which is also greater than 0.1. The incident light will be reflected at the interface between the transparent adhesive layer 16 and the protective layer 13. Thus, the optical antireflective film 15 is provided between the transparent adhesive layer 16 and the protective layer 13, which can improve the performance of the optical device under the display module.

It should be noted that when the protective layer 13 is a glass cover and the material of the transparent adhesive layer 16 is OCA, since the refractive index of the glass cover is 1.5, and the refractive index of the OCA is about 1.48, the difference between the refractive index of the transparent adhesive layer 16 and the refractive index of the protective layer 13 is 0.02, which is less than 0.1. The incident light may not be reflected at the interface between the transparent adhesive layer 16 and the protective layer 13. Thus, the optical antireflective film 15 may not be provided between the transparent adhesive layer 16 and the protective layer 13.

In one example not according to the claimed invention, as shown in Fig. 6, when the difference between the refractive index of the transparent adhesive layer 16 and the refractive index of the display screen 12 is greater than 0.1, the optical antireflective film 15 may be provided between the transparent adhesive layer 16 and the display screen 12, wherein the difference between the refractive index of the transparent adhesive layer 16 and the refractive index of the optical antireflective film 15 may be greater than 0.1, and the difference between the refractive index of the display screen 12 and the refractive index of the optical antireflective film 15 may be greater than 0.1. When the difference between the refractive index of the transparent adhesive layer 16 and the refractive index of the display screen 12 is greater than 0.1, the incident light will be reflected at the interface between the transparent adhesive layer 16 and the display screen 12. Thus, the optical antireflective film 15 is provided between the transparent adhesive layer 16 and the display screen 12, which can improve the performance of the optical device under the display module.

In one example not according to the claimed invention, the refractive index of the transparent adhesive layer 16 is 1.5, and the refractive index of the display screen 12 is 1.7, so that the difference between the refractive index of the transparent adhesive layer 16 and the refractive index of the display screen 12 is 0.2, which is greater than 0.1. The incident light will be reflected at the interface between the transparent adhesive layer 16 and the display screen 12. Thus, the optical antireflective film 15 is provided between the transparent adhesive layer 16 and the display screen 12, which can improve the performance of the optical device under the display module.

In one embodiment, as shown in Fig. 7, display screen 12 includes at least two media layers. Light can spread within a media layer and transmit through the media layer. Each of the at least two media layers may have the same or different refractive index for light with the same frequency. In the at least two media layers, the optical antireflective film 15 is disposed between the adjacent two media layers having a difference of refractive indexes greater than 0.1. The incident light will be reflected at the interface between the adjacent two media layers having a difference in refractive indexes greater than 0.1. Thus, the optical antireflective film 15 is provided between the adjacent two media layers having the difference in refractive indexes greater than 0.1, which can improve the performance of the optical device under the display module.

It will be illustrated as an example that the display screen 12 includes two media layers. As shown in Fig. 7, the display screen 12 includes a first media layer 121 and a second media layer 122, and the difference between the refractive index of the first media layer 121 and the refractive index of the second media layer 122 is greater than 0.1. The incident light will be reflected at the interface between the first media layer 121 and the second media layer 122. Thus, the optical antireflective film 15 is provided between the first media layer 121 and the second media layer 122, which can improve the performance of the optical device under the display module.

In one embodiment, an area of the optical antireflective film 15 is equal to a projected area of the optical device 11 on the display module 17. Naturally, the area of the optical antireflective film 15 may also be larger than the projected area of the optical device 11 on the display module 17.

In one embodiment, the material of the optical antireflective film may include calcium fluoride, titanium oxide, lead sulfide, lead selenide, ceramic infrared antireflection film or vinyl silsesquioxane hybrid film, but not limited thereto.

Finally, the above-mentioned optical antireflective film and the principle of antireflection will be further described.

Firstly, it should be noted that light has wave-particle duality, that is, microscopically, the light may be understood as a kind of wave, but also a bunch of high-speed moving particles, herein, it should be noted that the light cannot be simply understood as a wave and a particle). The above wave and particle are interpreted in a microscopic view. Einstein named it as a photon through research. The wavelength of the red light is 0.750 micron and the wavelength of the violet light is 0.400 micron, and the quality of a photon is 6.63E⁻³⁴ kilograms. Accordingly, the above wave and particle are evidently not the macro waves and particles as imagined. The principle of optical antireflective film is considered by taking the light as a kind of wave, since the light wave has an interference property as same as the mechanical wave. The optical antireflective film utilizes the interference principle of the light such that the light reflected by the front surface of the film interferes with the light reflected by the back surface of the film, to change light intensity of a transmission region by changing the light intensity of the reflection region.

In an optical instrument, reflection of the surface of the optical element affects the light-passing energy of the optical element, but also the reflected light forms a stray light in the instrument, to affect the imaging quality of the optical instrument. In order to solve this problem, a single-layer film or a multilayer film with a certain thickness is usually coated on the surface of the optical element in order to reduce the reflected light on the surface of the optical element, and such film is called as an optical antireflective film (or an antireflection film).

Secondly, the antireflection principle of the optical antireflective film is analyzed from a view of the energy conservation. Generally, when light is transmitted to the surface of an optical element in a given material, the energy of the generated reflected light and of the transmitted light are determined. The total energy of the reflected light and the transmitted light is equal to the energy of the incident light without considering absorption, scattering and other factors. That is, the law of conservation of energy is satisfied. When the surface of the optical element is coated with the optical antireflective film, the reflected light and the transmitted light as well as the incident light still satisfy the law of the energy conservation without considering the absorption and scattering of the optical antireflective film and other factors. The coating film has a function of redistributing the energy of the reflected light and the energy of the transmitted light. For the optical antireflective film, as a result of the distribution, the energy of the reflected light is reduced, and the energy of the transmitted light is increased. As can be seen, the role of the optical antireflective film is to redistribute the energy of the reflected light and the energy of the transmitted light on the surface of the optical element, due to the result of the distribution, the transmitted light energy is increased, and the reflected light energy is reduced. Accordingly, the optical antireflective film has such characteristic that the light intensity of the transmission region can be changed by changing the light intensity of the reflection region.

As above described, the optical antireflective film increases the transmitted light intensity substantively in that: during the light wave as an electromagnetic wave spreads, the distribution of the energy is changed at the interface of different medias due to different boundary conditions. For the single-layer optical antireflective film, since the medias on both sides of the optical antireflective film are different, and when the thickness of the optical antireflective film is an odd times of 1/4 wavelength and the refractive index of the optical antireflective film is n=(n1*n2)^{1/2}, all of the incident light may be transmitted through the media 2. Wherein, n1 and n2 are respectively the refractive indices of the media 1 and the media 2, and the media 1 and the media 2 are the medias on both sides of the optical antireflective film, and the light transmits through the media 1, the optical antireflective film and the media 2 in turn. For example, an optical lens (media 2) is generally used in air (media 1). For the optical lens with a refractive index of about 1.5, it can be made that n1 = 1.23, or close to 1.23, and that the thickness of the optical antireflective film = one quarter wavelength of (2k + 1) times, wherein k is a non-negative integer, in order to achieve a 100% antireflection effect of a single-layer optical antireflective film.

## Claims

1. A mobile terminal (100) comprising:
an optical device (11);
a display module (17); and
an optical antireflective film (15);
wherein the display module (17) is located above the optical device (11), and the optical antireflective film (15) is located on the display module (17) at a position corresponding to the position of optical device (11),
wherein the display module (17) comprises a display screen (12),
**characterized in that**
the display screen (12) comprises at least two media layers (121, 122);
the optical antireflective film (15) is disposed between two adjacent media layers of the at least two media layers, a difference in refractive indexes of the two adjacent media layers being greater than 0.1.

2. The mobile terminal (100) according to claim 1, **characterized in that** the display module (17) further comprises a protective layer (13);
the display screen (12) is located above the optical device (11), and the protective layer (13) is located above the display screen (12).

3. The mobile terminal (100) according to claim 2, **characterized in that** the display module (17) further comprises a transparent adhesive layer (16);
the transparent adhesive layer (16) is located between the display screen (12) and the protective layer (13).

4. The mobile terminal (100) according to claim 1, **characterized in that** an area of the optical antireflective film (15) is greater than or equal to a projected area of the optical device (11) on the display module (17).

5. The mobile terminal (100) according to claim 1, **characterized in that** the optical antireflective film (15) comprises at least two sub-film layers, and the at least two sub-film layers anti-reflect lights with different wavelength ranges, respectively.

6. The mobile terminal (100) according to claim 1, **characterized in that** the optical antireflective film (15) is made of calcium fluoride, titanium oxide, lead sulfide, lead selenide, ceramic infrared antireflection film or vinyl silsesquioxane hybrid film.

7. The mobile terminal (100) according to claim 2, **characterized in that** the protective layer (13) is a glass cover or a flexible cover film.

8. The mobile terminal (100) according to claim 7, **characterized in that** the flexible cover film comprises a polyimide film.

## Patentansprüche

1. Mobiles Endgerät (100) mit:
einer optischen Vorrichtung (11);
einem Anzeigemodul (17); und
einem optischen Antireflexionsfilm (15);
wobei das Anzeigemodul (17) über der optischen Vorrichtung (11) angeordnet ist, und der optische Antireflexionsfilm auf dem Anzeigemodul (17) an einer Position angeordnet ist, welche der Position der optischen Vorrichtung (11) entspricht,
wobei das Anzeigemodul (17) einen Anzeigebildschirm (12) aufweist,
**dadurch gekennzeichnet,**
**dass** der Anzeigebildschirm (12) mindestens zwei Medienschichten (121, 122) aufweist;
der optische Antireflexionsfilm (15) zwischen zwei benachbarten Medienschichten angeordnet ist, wobei eine Differenz zwischen den Brechungsindizes der beiden benachbarten Medienschichten größer als 0,1 ist.

2. Mobiles Endgerät (100) nach Anspruch 1, **dadurch gekennzeichnet, dass** das Anzeigemodul (17) ferner eine Schutzschicht (13) aufweist;
wobei der Anzeigebildschirm (12) über der optischen Vorrichtung (11) angeordnet ist, und die Schutzschicht (13) über dem Anzeigebildschirm (12) angeordnet ist.

3. Mobiles Endgerät (100) nach Anspruch 2, **dadurch gekennzeichnet, dass** das Anzeigemodul (17) ferner eine transparente Kleberschicht (16) aufweist;
wobei die transparente Kleberschicht (16) zwischen dem Anzeigebildschirm (12) und der Schutzschicht (13) angeordnet ist.

4. Mobiles Endgerät (100) nach Anspruch 1, **dadurch gekennzeichnet, dass** eine Fläche des optischen Antireflexionsfilms (15) größer als oder gleich einer projizierten Fläche der optischen Vorrichtung (11) auf das Anzeigemoduls (17) ist.

5. Mobiles Endgerät (100) nach Anspruch 1, **dadurch gekennzeichnet, dass** der optische Antireflexionsfilm (15) mindestens zwei Unter-Filmschichten aufweist, und die mindestens zwei Unter-Filmschichten jeweils für Licht mit unterschiedlichen Wellenlängenbereichen antireflektierend sind.

6. Mobiles Endgerät (100) nach Anspruch 1, **dadurch gekennzeichnet, dass** der optische Antireflexionsfilm (15) aus Calciumfluorid, Titanoxid, Bleisulfid, Bleiselenid, keramischem Infrarot-Antireflexionsfilm oder Vinyl-Silsesquioxan-Hybridfilm besteht.

7. Mobiles Endgerät (100) nach Anspruch 2, **dadurch gekennzeichnet, dass** die Schutzschicht (13) eine Glasabdeckung oder eine flexible Abdeckfolie ist.

8. Mobiles Endgerät (100) nach Anspruch 7, **dadurch gekennzeichnet, dass** die flexible Abdeckfolie eine Polyimidfolie aufweist.

## Revendications

1. Terminal mobile (100), comprenant :
un dispositif optique (11) ;
un module d'affichage (17) : et
un film optique antireflet (15) ;
dans lequel le module d'affichage (17) est situé au-dessus du dispositif optique (11), et le film optique antireflet (15) est situé sur le module d'affichage (17) à une position correspondant à celle du dispositif optique (11),
dans lequel le module d'affichage (17) comprend un écran d'affichage (12),
**caractérisé en ce que**
l'écran d'affichage (12) comprend au moins deux couches de support (121, 122) ;
le film optique antireflet (15) est disposé entre deux couches de support adjacentes des au moins deux couches de support, une différence entre les indices de réfraction des deux couches de support adjacentes étant supérieure à 0,1.

2. Terminal mobile (100) selon la revendication 1, **caractérisé en ce que** le module d'affichage (17) comprend en outre une couche de protection (13) ;
l'écran d'affichage (12) est situé au-dessus du dispositif optique (11), et la couche de protection (13) est située au-dessus de l'écran d'affichage (12).

3. Terminal mobile (100) selon la revendication 2, **caractérisé en ce que** le module d'affichage (17) comprend en outre une couche adhésive transparente (16) ;
la couche adhésive transparente (16) est située entre l'écran d'affichage (12) et la couche de protection (13).

4. Terminal mobile (100) selon la revendication 1, **caractérisé en ce qu'**une surface du film optique antireflet (15) est supérieure ou égale à une surface projetée du dispositif optique (11) sur le module d'affichage (17).

5. Terminal mobile (100) selon la revendication 1, **caractérisé en ce que** le film optique antireflet (15) comprend au moins deux sous-couches de film, et les au moins deux sous-couches de film présentent une capacité antireflet des lumières avec des plages de longueurs d'onde différentes, respectivement.

6. Terminal mobile (100) selon la revendication 1, **caractérisé en ce que** le film optique antireflet (15) est constitué de fluorure de calcium, d'oxyde de titane, de sulfure de plomb, de séléniure de plomb, d'un film antireflet infrarouge en céramique ou d'un film hybride en vinyle silsesquioxane.

7. Terminal mobile (100) selon la revendication 2, **caractérisé en ce que** la couche de protection (13) est une couverture en verre ou un film de couverture flexible.

8. Terminal mobile (100) selon la revendication 7, **caractérisé en ce que** le film de couverture flexible comprend un film de polyimide.
